# FASCICULE DE BREVET EUROPEEN

(11) **EP 0 537 096 B1**
(45) Date de publication et mention de la délivrance du brevet: **03.01.1996**
(21) Numéro de dépôt: 92440112.8
(22) Date de dépôt: 07.10.1992
(51) Int. Cl.: B29C 47/06, B29C 47/58, B29C 47/04, A23P 1/12

(54) **Groupe de co-extrusion à sorties parallèles multiples et à trois couleurs**
Vorrichtung mit mehreren parallelen Düsen zum dreifarbig Co-extrudieren
Apparatus with multiple parallel nozzles for three-coloured co-extrusion

(30) Priorité: 10.10.1991 FR 9112657
(43) Date de publication de la demande: 14.04.1993
(73) Titulaire: Société TOGUM, F-67116 Reichstett (FR)
(72) Inventeur: Towae, Gérard, F-67000 Strasbourg (FR)
(74) Mandataire: Metz, Paul

(56) Documents cités:
- EP-A- 0 233 434
- DE-A- 2 523 836
- FR-A- 847 554
- FR-A- 1 224 923
- FR-A- 2 154 579
- US-A- 2 532 131
- US-A- 4 888 146

## Description

La présente invention concerne un groupe de co-extrusion à sorties parallèles multiples à trois couleurs pour pâte à mâcher ou analogue.

Classiquement, la pâte à mâcher est élaborée par une unité de préparation comportant un module de malaxage pour chacune des pâtes colorées. D'un groupe d'extrusion alimenté par les pâtes de couleur sous pression, sort en continu un produit filiforme composite dans lequel les pâtes de couleur sont juxtaposées.

Actuellement, la plupart des groupes d'extrusion multisorties sont limités à deux sorties et deux couleurs, et s'avèrent notablement complexes, d'autre part, ils ne comportent pas de moyen d'obturation de la sortie de produit lorsque les organes situés en aval tombent en panne.

Le déposant a, d'une part, cherché à résoudre cette difficulté, et d'autre part, s'est fixé d'atteindre simultanément les buts suivants :
. concevoir et réaliser un groupe d'extrusion d'un boudin de pâte continu à trois couleurs juxtaposées comprenant un dispositif multisorties dans lequel les sorties sont indépendantes et fonctionnent en parallèle ;
. concevoir et réaliser un dispositif multisorties comportant des unités d'extrusion interchangeables à pièces constitutives simples ;
. permettre une fermeture ou une ouverture des filières d'extrusion par une manoeuvre rapide, simple et réversible n'impliquant que des moyens peu onéreux ;
. concevoir et réaliser un dispositif de filière interchangeable d'un groupe de préparation à l'autre.

On connaît du document FR-A- 847 554 un groupe de co-extrusion adapté pour trois couleurs, qui présente toutes les caractéristiques du préambule de la revendication 1. Il s'agit en effet d'un groupe de co-extrusion à trois couleurs pour pâte à mâcher ou analogue, comportant une unité de préparation à trois voies formées chacune d'un malaxeur et d'un module de compression-chauffage à vis ("boudineuses") débitant la pâte dans un bloc composite mécanique d'extrusion. Dans le bloc sont conformées trois chambres longitudinales cylindriques rectilignes parallèles d'alimentation-extrusion, supérieure, médiane et inférieure portant une tête de sortie d'extrusion démontable. La tête d'extrusion est constituée d'un boisseau composite à trois voies suivi d'une filière pour la formation en continu d'un boudin tricolore constitué de trois cordons de pâte juxtaposés.
Cet état de la technique ne prévoit cependant aucune mesure permettant d'agencer plusieurs têtes d'extrusion sur les voies. Le groupe de co-extrusion selon FR-A- 847 554 n'est pas adapté à recevoir un dispositif multisorties au sens de l'invention.

Le groupe de co-extrusion selon l'invention est défini par les caractéristiques de la revendication 1. Des modes particuliers du groupe sont définis par les revendications dépendantes.

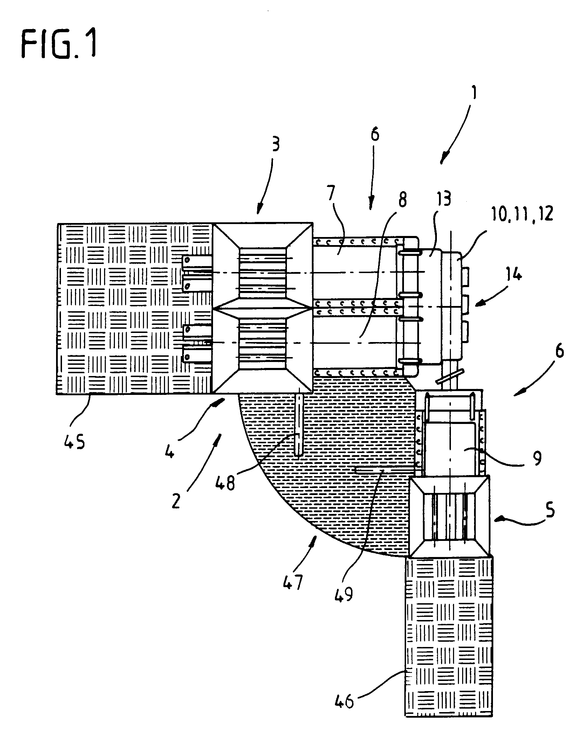

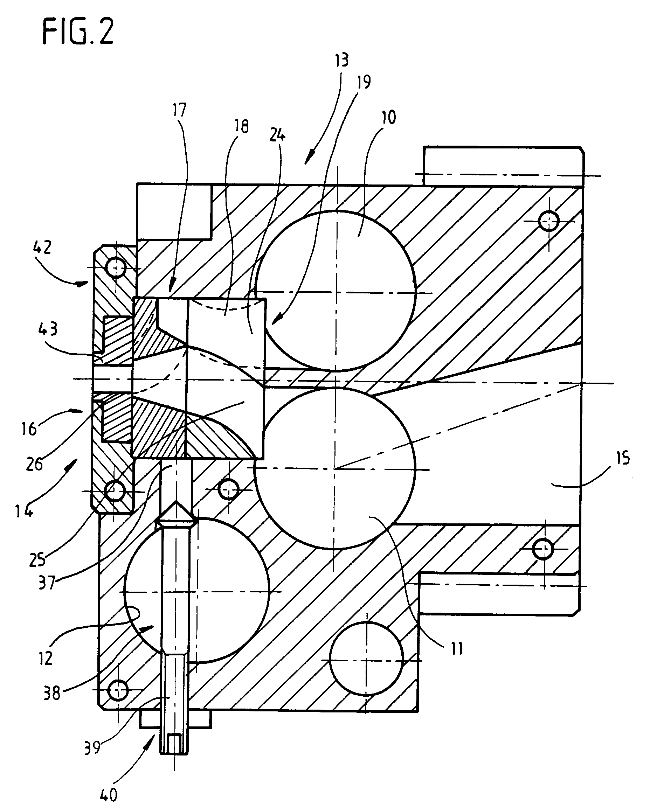

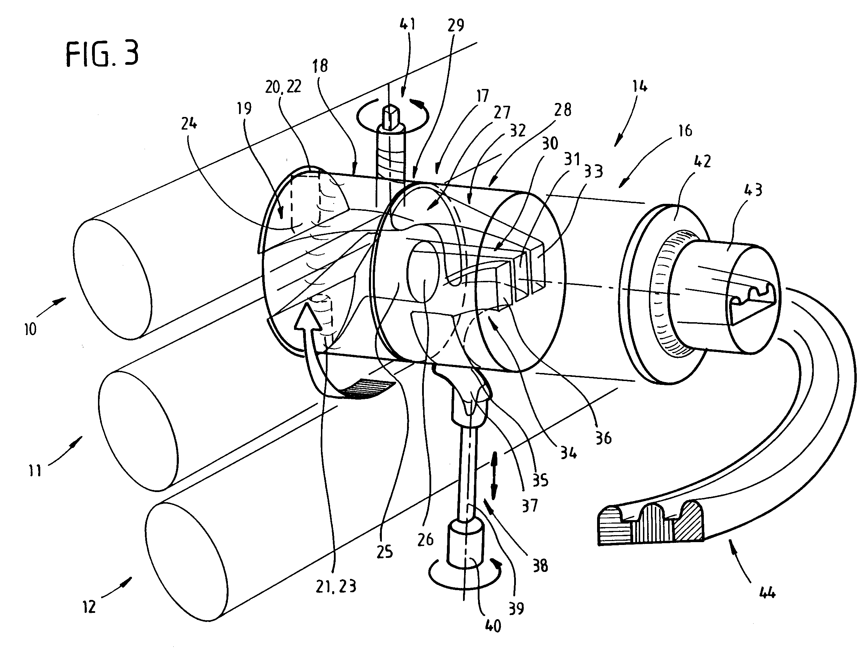

On comprendra mieux l'invention à l'aide de la description ci-après d'un mode de réalisation non limitatif de l'invention, faite en référence aux figures annexées suivantes :
. la figure 1 est une vue en plan de l'unité complète d'extrusion selon l'invention ;
. la figure 2 est une vue en coupe verticale transversale du corps composite d'extrusion au niveau du canal correspondant à la foie inférieure ;
. la figure 3 est une vue générale en perspective dite en transparent du groupe de co-extrusion à trois couleurs selon l'invention.

Le corps composite d'extrusion selon l'invention comprend trois chambres parallèles d'alimentation de pâte sous pression; ce corps est adaptable aux sorties d'un groupe de préparation. Ce corps porte des unités interchangeables de sortie en nombre variable, à filières pivotantes selon au moins deux positions permettant une pleine ouverture et une fermeture totale ou partielle des alimentations en pâte.

Pour réaliser la réunion des chambres par des pièces mécaniquement simples, on a prévu deux interfaces successives entre les chambres parallèles et les filières.

Le groupe d'extrusion 1 représenté en plan sur la figure 1 comporte classiquement une unité 2 de préparation à trois voies, une pour chaque couleur de pâte, chacune formée d'un malaxeur 3, 4 et 5 débitant la pâte par une sortie de l'unité de préparation 2 dans un corps composite d'extrusion 6.

Le corps composite d'extrusion 6 est formé de trois modules de compression-chauffage 7, 8 et 9 à vis de compression débouchant chacune dans l'une des trois chambres longitudinales d'alimentation-extrusion respectivement supérieure 10, médiane 11 et inférieure 12 formées dans un bloc mécanique d'extrusion 13 et destinées à porter sur toute leur longueur une pluralité de têtes de sortie d'extrusion telles que 14 en nombre limité uniquement par de simples contraintes techniques.

La disposition générale des unités ci-dessus est en ligne, c'est-à-dire à trois voies juxtaposées parallèles les unes aux autres, ou mixte. On comprendra par mixte une disposition selon laquelle une des unités est placée perpendiculaire aux deux autres comme représenté sur la figure 1.

Les chambres supérieure et médiane 10 et 11 sont juxtaposées côte à côte tandis que la chambre inférieure 12 est disposée vers le bas, parallèle aux deux autres, mais de préférence décalée vers l'avant.

Chaque module de compression-chauffage débouche dans une chambre correspondante d'alimentation-extrusion par un volume convergent de raccordement d'alimentation tel que 15.

Le corps composite d'extrusion 6 constitue une unité de compression et de chauffage suivi du bloc mécanique d'extrusion 13. Le corps composite d'extrusion 6 se présente sous la forme générale non limitative d'un ensemble mécanique parallélépipédique comportant les modules de compression-chauffage 7, 8 et 9 et le bloc d'extrusion 13. Ce dernier comporte les trois chambres d'alimentation-extrusion 10, 11 et 12 et les têtes de sortie d'extrusion 14. Ces chambres de forme cylindrique sont juxtaposées, parallèles et dirigées dans la direction du plus grand axe du bloc d'extrusion 13.

On examinera maintenant les têtes de sortie d'extrusion 14 et leur raccordement avec les chambres d'alimentation-extrusion 10, 11 et 12, en référence à la figure 2.

La face arrière de fixation du bloc mécanique d'extrusion 13 sur les sorties des modules de compression-chauffage 7, 8 et 9 est parallèle à la direction générale des chambres, et comporte trois ouvertures débouchant chacune dans un des volumes convergents de raccordement 15 qui constituent les passages d'alimentation-extrusion des chambres en pâte.

Chaque volume de raccordement 15 présente une section de départ oblongue supérieure à la section d'arrivée qui est également oblongue (non représentées).

Sur le groupe des chambres cylindriques d'alimentation-extrusion sont montées, en des endroits quelconques, plusieurs têtes de sortie d'extrusion 14. Sur les figures, seule une de ces têtes n'est montrée.

On peut prévoir un grand nombre de têtes de sortie d'extrusion 14, nombre limité seulement par des contraintes techniques de place disponible et de capacité de l'installation.

Chaque tête de sortie d'extrusion 14 est du type de celle représentée sur les figures 2 et 3. Elle est montée de telle façon qu'elle couvre simultanément les deux chambres centrales 10 et 11 parallèles entre elles et reçoive de chacune d'entre elles une pâte de couleur différente.

Cette tête de sortie d'extrusion est formée d'une filière 16 et d'un boisseau composite mobile 17 réalisé en deux parties formant une interface entre la filière 16 et les chambres d'alimentation-extrusion.

Ce boisseau composite 17 a pour fonction essentielle de regrouper les sorties des chambres situées au droit de celui-ci tel un collecteur et d'ouvrir ou d'obturer totalement ou partiellement la communication avec lesdites sorties.

La partie amont du boisseau 17 est une pièce creuse cylindrique mobile 18 à deux voies pour la réunion préalable des deux premières chambres 10 et 11 juxtaposées de la tête d'extrusion.

Cette pièce creuse 18 à deux voies est montée pivotante autour d'un axe perpendiculaire au plan vertical longitudinal médian des deux chambres supérieure et médiane 10 et 11 d'alimentation-extrusion (figure 3). Son front arrière 19 pénètre partiellement localement dans le corps mécanique de la tête d'extrusion, c'est-à-dire dans les deux chambres supérieure et médiane juxtaposées qu'elle chevauche. Le front arrière 19 de cette pièce creuse arrive en contact avec les deux chambres 10 et 11, comme on peut le voir sur la figure 3. Il présente deux ouvertures d'entrée 20 et 21 sensiblement rectangulaires et diamétralement opposées, placées en regard des passages correspondants 22 et 23 évidés dans les parois des deux premières chambres d'alimentation-extrusion.

La pièce creuse cylindrique mobile 18 de boisseau présente une cavité supérieure 24 en communication avec la chambre supérieure 10, et une cavité inférieure 25 en communication avec la chambre intermédiaire 11.

La cavité inférieure 25 affecte la forme d'un volume creux, coudé et convergeant depuis l'entrée de la face plane jusqu'à une sortie circulaire centrale 26 située sur la face plane opposée.

La cavité supérieure 24 affecte la forme d'un volume creux, disposé latéralement sur la pièce, convergeant depuis l'autre ouverture d'entrée de la face plane jusqu'à une sortie 27 en forme de haricot.

La partie aval du boisseau est une pièce cylindrique fixe 28 prolongeant la partie amont 18 après une surface de jonction 29. Sa fonction est de réunir les deux volumes précédents à une troisième chambre et de les placer côte à côte.

La pièce aval cylindrique fixe 28 du boisseau comporte trois voies correspondant à trois cavités distinctes de son corps.

Une cavité centrale 30 se développe autour de l'axe de révolution du boisseau, et converge légèrement depuis une section de départ circulaire coïncidant avec la sortie circulaire centrale 26 jusqu'à une section de sortie rectangulaire centrale 31.

Une première cavité latérale 32 converge sans changement de direction depuis la section de départ en haricot 27 identique à la sortie correspondante de la pièce creuse aval, jusqu'à une première section de sortie rectangulaire latérale 33 placée à côté de la sortie centrale 31.

Une deuxième cavité latérale 34 est destinée à amener la troisième couleur depuis la troisième chambre, ou chambre inférieure 12. Elle est coudée à angle droit et converge depuis une section de départ circulaire 35 débouchant sur l'enveloppe latérale cylindrique de la pièce amont jusqu'à une deuxième section de sortie rectangulaire latérale 36 située de l'autre côté de la sortie centrale 31 par rapport à la première sortie latérale précédente 33.

La section de départ de cette deuxième cavité latérale coudée 34 communique avec un passage-orifice 37 de sortie de pâte de la troisième chambre 12 du bloc d'extrusion.

Ce passage-orifice 37 est obturable par une pièce du type pointeau 38 à tige filetée 39 dont l'extrémité est conformée en bouton de manoeuvre 40.

Par ailleurs, en vue d'obturer ou d'ouvrir partiellement ou complètement les deux premières cavités d'alimentation, ou bien en vue d'en inverser la position de sortie, on prévoit d'équiper la partie amont 18 du boisseau 17 de moyens de pivotement 41, par exemple du type à vis s'engrenant sur une crémaillère.

Sur la face plane de sortie du boisseau 17 est montée la filière 16 constituée d'une monture mécanique 42 qui porte une pièce de filière interchangeable 43, pièce évidée selon la forme de profil d'extrusion souhaitée.

La réunion-juxtaposition des pâtes de couleurs différentes s'effectue à chaud dans la pièce de filière d'où sort un boudin tricolore 44 de profil unique.

La pièce de filière 43 présente une cavité intérieure dont la section d'entrée est rectangulaire et couvre les trois sorties des cavités du boisseau 17, et dont la section de sortie affecte la forme décorative souhaitée, par exemple la forme en créneaux représentée sur la figure 3. Cette filière est de préférence cylindrique et possède un épaulement annulaire de fixation sur le boisseau.

Les ensembles d'extrusion correspondant aux différentes voies, comme représenté sur la figure 1, comportent chacun une table 45 ou 46 et sont réunis entre eux par un plateau central 47 en quart de cercle supporté par deux bras 48 et 49.

## Revendications

1. Groupe de co-extrusion à trois couleurs pour pâte à mâcher ou analogue, comportant une unité de préparation à trois voies formées chacune d'un malaxeur et d'un module de compression-chauffage à vis débitant la pâte dans un bloc composite mécanique d'extrusion (13) dans lequel sont conformées trois chambres longitudinales cylindriques rectilignes parallèles d'alimentation-extrusion, supérieure (10), médiane (11) et inférieure (12), le bloc mécanique d'extrusion comportant au moins une tête de sortie d'extrusion (14) démontable, constituée chacune d'un boisseau composite (17) à trois voies suivi d'une filière (16) pour la formation en continu d'un boudin tricolore (44) constitué de trois cordons de pâte juxtaposés, le boisseau composite (17) présentant une pièce amont pivotante (18), et une pièce aval (28) fixe à trois cavités regroupant les trois voies de pâte provenant des trois chambres d'alimentation-extrusion, caractérisé en ce qu'une pluralité de têtes de sortie d'extrusion (14) démontables sont prévues sur toute la longueur des trois chambres (10,11,12) d'alimentation-extrusion, en ce que la pièce amont pivotante (18) de chaque boisseau (17) possède uniquement deux voies ou cavités intérieures, par lesquelles ladite pièce amont (18) communique avec la chambre supérieure (10) et la chambre médiane (11) et en ce qu'une cavité de la pièce fixe aval (28) de chaque boisseau communique directement avec la chambre inférieure (12).

2. Groupe de co-extrusion selon la revendication 1, caractérisé en ce que chaque tête de sortie d'extrusion (14) chevauche les chambres d'alimentation-extrusion supérieure (10) et médiane (11).

3. Groupe de co-extrusion selon la revendication 1 ou 2, caractérisé en ce que, parmi les trois cavités intérieures (30,32,34) de la pièce fixe aval (28) de chaque boisseau (17) l'une est centrale (30) et les deux autres cavités (32;34) sont latérales.

4. Groupe de co-extrusion selon l'une quelconque des revendications précédentes, caractérisé en ce que la pièce amont mobile (18) de chaque boisseau (17) présente sur son front arrière (19) des ouvertures (20,21) faisant face à d'autres ouvertures (22, 23) existant dans l'une et l'autre chambre d'alimentation-extrusion respectivement supérieure (10) et médiane (11), en vue de l'obturation pleine ou partielle des passages formés par ces ouvertures par le seul mouvement de pivotement du boisseau (17) et donc la communication partielle totale ou sélective avec les cavités de la pièce mobile (18) respectivement supérieure (24) et inférieure (25).

5. Groupe de co-extrusion selon la revendication 3, caractérisé en ce que la partie fixe aval (28) de chaque boisseau communiquant avec la chambre inférieure (12) présente une entrée latérale débouchant sur une cavité latérale (34), l'entrée latérale étant obturée par un dispositif d'obturation (38) du type à pointeau.

6. Groupe de co-extrusion selon la revendication 5, caractérisé en ce que la cavité centrale (30) et l'autre cavité latérale (32) de la pièce fixe aval (28) du boisseau (17) communiquent avec les cavités de la pièce mobile amont (18).

## Claims

1. A three-colour co-extrusion unit for chewing gum or the like, comprising a preparation unit with three channels each formed by a mixer and a screw compression-heating module delivering the gum to a composite mechanical extrusion block (13) in which are formed three longitudinal, cylindrical, straight, parallel supply-extrusion chambers, an upper chamber (10), a central chamber (11), and a lower chamber (12), the mechanical extrusion block comprising at least one removable extrusion outlet head (14), each head being constituted by a composite three-channel casing followed by a die (16) for the continuous formation of a three-coloured sausage (44) constituted by three juxtaposed strands of gum, the composite casing (17) having a swivelling upstream element (18) and a fixed downstream element (28) with three cavities combining the three channels for the gum coming from the three supply-extrusion chambers, characterized in that a plurality of removable extrusion output heads (14) is provided throughout the length of the three supply-extrusion chambers (10, 11, 12), in that the swivelling upstream element (18) of each casing (17) has only two internal channels or cavities by means of which the said upstream element (18) communicates with the upper chamber (10) and the central chamber (11), and in that a cavity of the fixed downstream element (28) of each casing communicates directly with the lower chamber (12).

2. A co-extrusion unit according to Claim 1, characterized in that each extrusion outlet head (14) overlaps the upper and central supply-extrusion chambers (10 and 11).

3. A co-extrusion unit according to Claim 1 or Claim 2, characterized in that, of the three internal cavities (30, 32, 34) of the fixed downstream element (28) of each casing (17), one (30) is central and the other two cavities (32, 34) are lateral.

4. A co-extrusion unit according to any one of the preceding claims, characterized in that the movable upstream element (18) of each casing (17) has, on its rear face (19), openings (20, 21) facing further openings (22, 23) existing, respectively, in the upper supply-extrusion chamber (10) and in the central supply-extrusion chamber (11), with a view to the complete or partial blockage of the channels formed by these openings simply by the swivelling movement of the casing (17) and hence partial, full, or selective communication with the upper and lower cavities (24, 25) of the movable element (18), respectively.

5. A co-extrusion unit according to Claim 3, characterized in that the fixed downstream portion (28) of each casing, which communicates with the lower chamber (12), has a lateral inlet opening into one lateral cavity (34), the lateral inlet being blocked by a blocking device (38) of the type with a pin.

6. A co-extrusion unit according to Claim 5, characterized in that the central cavity (30) and the other lateral cavity (32) of the fixed downstream element (28) of the casing (17) communicate with the cavities of the movable upstream element (18).

## Patentansprüche

1. Vorrichtung zum dreifarbig Koextrudieren von Kaumasse od. dgl., bestehend aus einer dreizügigen Zubereitungseinheit, von denen jede aus einem Mischer und einem Druck-Heiz-Modul mit Schnecke zur Druckerhitzung gebildet ist, das die Masse an einen Extrusionsverbundblock (13) abgibt, in dem drei longitudinale, zylindrische, gerade, parallele Kammern für die Extrusionsspeisung -eine obere (10), mittlere (11) und untere (12)- ausgebildet sind, und der wenigstens einen demontierbaren Extrudierkopf aufweist, von denen jeder aus einem Dreikanal-Verbundgehäuse (17), gefolgt von einer Düse (16) zur kontinuierlichen Herstellung eines dreifarbigen Strangs (44) aus drei nebeneinanderliegenden Massesträngen gebildet ist und das Verbundgehäuse (17) stromauf ein drehbares Oberteil (18) und stromab ein festes Unterteil (28) mit drei Hohlräumen aufweist, die die drei Massewege aus den drei Kammern für die Extrusionsspeisung zusammenführen, dadurch gekennzeichnet, daß entlang der drei Kammern (10, 11, 12) der Extrusionsspeisung eine Mehrzahl von demontierbaren Extrudierköpfen vorgesehen ist, daß das drehbare Oberteil (18) jedes Verbundgehäuses (17) nur zwei Kanäle oder innere Hohlräume besitzt, über die das Oberteil (18) mit der oberen Kammer (10) und der mittleren Kammer (11) kommuniziert, und daß ein Hohlraum des festen Unterteils (28) jedes Gehäuses direkt mit der unteren Kammer (12) kommuniziert.

2. Vorrichtung gemäß Anspruch 1, dadurch gekennzeichnet, daß jeder Extrudierkopf (14) die obere (10) und die mittlere (11) Kammer für die Extrusionsspeisung übergreift.

3. Vorrichtung gemäß Anspruch 1 oder 2, dadurch gekennzeichnet, daß von den drei inneren Hohlräumen (30, 32, 34) des festen Unterteils jedes Gehäuses einer zentral und die beiden anderen Hohlräume (32, 34) lateral angeordnet sind.

4. Vorrichtung gemäß einem der vorangehenden Ansprüche, dadurch gekennzeichnet, daß das bewegliche Oberteil (18) jedes Gehäuses (17) an seiner Rückseite (19) Öffnungen (20, 21) aufweist, die anderen Öffnungen (22, 23) gegenüberliegen, die in der einen und der anderen Kammer für die Extrusionsspeisung bzw. in der oberen (10) und der unteren Kammer (11) vorhanden sind, um den vollständigen oder teilweisen Verschluß der durch diese Öffnungen gebildeten Durchgänge allein durch die Drehbewegung des Gehäuses und somit die teilweise, vollständige oder selektive Verbindung mit dem jeweils oberen (24) und unteren (25) Hohlraum des beweglichen Unterteils (18) zu ermöglichen.

5. Vorrichtung gemäß Anspruch 3, dadurch gekennzeichnet, daß das feste Unterteil (28) jedes Gehäuses, das mit der unteren Kammer (12) kommuniziert, einen in einen lateralen Hohlraum (34) einmündenden lateralen Eingang aufweist, der durch eine Verschlußeinrichtung (38) von Typ einer Düsennadel verschlossen wird.

6. Vorrichtung gemäß Anspruch 5, dadurch gekennzeichnet, daß der zentrale Hohlraum (30) und der andere laterale Hohlraum (32) des festen Unterteils (28) des Gehäuses (17) mit den Hohlräumen des beweglichen Oberteils (18) kommunizieren.
